# EUROPEAN PATENT APPLICATION

(11) **EP 4 345 124 A1**
(43) Date of publication of application: **03.04.2024**
(21) Application number: 22198684.7
(22) Date of filing: 29.09.2022
(51) Int. Cl.: C08J 11/08

(54) **METHOD FOR SEPARATING POLYURETHANE FROM A TEXTILE**

(71) Applicant: Universität Innsbruck, 6020 Innsbruck (AT)
(72) Inventor: Vonbrül, Lukas, 6850 Dornbirn (AT); Pham, Tung, 6850 Dornbirn (AT); Bechtold, Thomas, 6850 Dornbirn (AT); Cordin, Michael, 6850 Dornbirn (AT)
(74) Representative: Schwarz & Partner Patentanwälte GmbH

(57) **Abstract**

A method for selectively separating polyurethane from a textile, wherein the textile comprises a mixture of polyurethane fibres with at least one other type of fibres, comprising the steps of immersing the textile in a solvent-mixture, said solvent-mixture comprising dimethyl sulfoxide (DMSO) as a first solvent and at least one other solvent selected from the group consisting of tetrahydrofuran (THF), 2-methyltetrahydrofuran (2-MeTHF), cyclopentyl methyl ether (CPME) and cyclohexanone, keeping the textile in contact with the solvent-mixture so as to dissolve polyurethane and forming a solution, and removing afterwards the remaining textile from the solution while polyurethane remains dissolved in the solution.

## Description

The present invention relates to a method for selectively separating polyurethane from a textile, wherein the textile comprises a mixture of polyurethane fibres with at least one other type of fibres. Furthermore, the invention relates to a solvent-mixture for selectively dissolving polyurethane.

### BACKGROUND OF THE INVENTION

The European textile and clothing industry has an annual turnover of approximately 180 bn EUR and employs over 1.7 million people. Clothing accounts for between 2% and 10% of the environmental impact of EU consumption. Cellulose, including cotton (CELL), polyester (PES) and polyamide (PA) are among the fibres with the largest volumes. Most of the textile waste material is either incinerated or sent to landfill. In Europe, about 4.3 million tonnes of textile waste are disposed of annually, as there are no viable recycling strategies for coloured textiles.

Clothing very often involves blends of different types of polymers. Very large quantities of fibre blends are e.g. cotton/elastane, PES/elastane and PA/elastane. A complete separation and recovery of all polymers from such blends cannot be achieved with mechanical processes because the components are tightly mixed. To solve this problem, chemical separation methods (chemical recycling) are used. Examples include recycling of cotton from textile waste based on the use of amine oxide solvents, e.g. NMMO or ionic liquids. Chemical recycling of PES focuses on the depolymerisation of polyester, e.g. by thermal and catalytic decomposition, hydrolysis or methanolysis. For depolymerisation by hydrolysis of polyamide also supercritical fluids are used. However, depolymerisation and re-polymerisation require extensive purification steps to separate and isolate the different monomers before re-polymerisation can take place. The energy requirement for such steps is also enormous. Polyamide swelling by using mixtures of CaCl₂, ethanol and water is described in WO 2018/172453 A1.

The processes available in the prior art today include high amounts of by-products and residues (additives, dyes, decomposition products).

Elastic polyurethane (also known as elastane) is an elastomer with polymer chains of soft and hard segments. The highly polar "urea segments" being hard and usually making up over 30 wt.% are difficult to dissolve due to the hydrogen bonds between the chains. Known solvents for elastane are e.g. dimethylformamide (DMF) and dimethylacetamide (DMAc). Regulations such as REACH (Regulation concerning the Registration, Evaluation, Authorisation and Restriction of Chemicals) classify both DMF and DMAc as substances of very high concern (carcinogenic, mutagenic, toxic to reproduction). Nevertheless, the DMF solvent system is still the first choice for elastane dissolution (WO 2020/130825 A1). Another possible solvent is chloroform which is even less recommended due to its toxic effect.

A possible strategy for dissolving polyurethane is glycolysis or aminolysis, the mechanism of glycolysis being shown below:

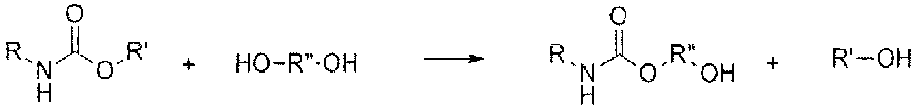

Using diols and high temperatures, polyurethane is chemically split into polyols that can be reused to produce polyurethane.

As mentioned above, textiles and clothing usually contain blends of different polymer fibres. It is not possible to selectively separate polyurethane from a blend with polyester with polyols since polyester reacts with polyols and is also split into monomers by glycolysis.

### BRIEF DESCRIPTION OF THE INVENTION

Until now it is not possible to selectively separate polyurethane from mixtures or blends with other polymers. When it comes to textiles it is of utmost importance to provide a method for separating polyurethane from other polymers in order to properly recycle textiles.

One object of the present invention is to provide a method for selectively separating polyurethane from a textile, wherein the textile comprises polyurethane fibres mixed with other types of fibres.

This object is solved by a method for selectively separating polyurethane from a textile,
wherein the textile comprises a mixture (blend) of polyurethane fibres with at least one other type of fibres, comprising the steps of
immersing the textile in a solvent-mixture, said solvent-mixture comprising dimethyl sulfoxide (DMSO) as a first solvent and at least one other solvent selected from the group consisting of tetrahydrofuran (THF), 2-methyltetrahydrofuran (2-MeTHF), cyclopentyl methyl ether (CPME) and cyclohexanone,
keeping the textile in contact with the solvent-mixture so as to dissolve polyurethane and forming a solution, and
removing afterwards the remaining textile from the solution while polyurethane remains dissolved in the solution.

The present invention employs a method of chemical separation of blended fibres by selectively dissolving polyurethane from the blend/mixture. "Selectively" in this sense means that only polyurethane is dissolved whereas other fibres and polymers remain unchanged. Polyurethane is usually the component with lower content in such fibre blends (including blends such as CELL/polyurethane, PES/polyurethane and PA/polyurethane). The solvent-mixture can be easily recovered as shown below.

The materials obtained by this separation technique can be used directly as raw materials for the production of new fibres without the resource-consuming steps of depolymerisation and re-polymerisation: The dissolved polyurethane can be regenerated from the solution (e.g. by precipitation) and the remaining textile can be used for new production steps as well.

Surprisingly, DMSO, THF, 2-MeTHF, CPME and Cyclohexanone alone are very poor solvents or no solvents at all for polyurethane. However, solvent-mixtures of DMSO with THF, 2-MeTHF, CPME and/or cyclohexanone are powerful solvents for polyurethane. Furthermore, these solvent mixtures showed to be selective for polyurethane alone but showed no dissolution of all other types of natural and synthetic fibres used in textile industry, including cellulose such as cotton, PES, and PA.

Hence, in one aspect of the invention, in the textile comprising a mixture of polyurethane fibres with at least one other type of fibres, the at least one other type of fibres comprises fibres selected from the group consisting of cellulose, PES, PA, and mixtures thereof. Preferably, no additional fibres consisting of a polymer are present in the textile.

Even more surprisingly the inventors found out that the selective dissolution of polyurethane in the solvent-mixtures works best at low temperatures, such as room temperature or close to room temperature. Hence, in one aspect of the invention the solvent in the step of keeping the textile in contact so as to dissolve polyurethane is carried out at temperatures in the range of 15 °C to 50 °C, preferably in the range of 20 °C to 35 °C.

After having polyurethane dissolved in the solvent-mixture, polyurethane can be regenerated from the solution. Regeneration can be achieved e.g. by adding a non-solvent, preferably water, to the solution. Polyurethane is then precipitated as pure substance and the precipitant can be separated. Regeneration can also be achieved by evaporation of the solvents or the evaporation of one component of the solvent-mixture. The solvent(s) can then be reused for another step of dissolving polyurethane.

In one embodiment of the invention the solvent-mixture consists of DMSO and at least one solvent selected of the group consisting of THF, 2-MeTHF, CPME and cyclohexanone, with the following contents:
- 20% v/v to 40% v/v DMSO,
- 60% v/v to 80% v/v THF, 2-MeTHF, CPME and/or Cyclohexanone,
- ≤ 2% v/v other substances.

Preferably, the contents of the solvent-mixture are
- 25% v/v to 35% v/v DMSO,
- 65% v/v to 75% v/v THF, 2-MeTHF, CPME and/or Cyclohexanone,
- ≤ 2% v/v other substances.

Percentages are expressed in volume percent (% v/v) unless otherwise specified.

Preferably, the solvent-mixture consists only of DMSO and at least one solvent selected of the group consisting of THF, 2-MeTHF, CPME and Cyclohexanone.

One aspect of the invention relates to a selective solvent-mixture for polyurethane. This solvent-mixture consists of:
- 20% v/v to 40% v/v DMSO,
- 60% v/v to 80% v/v THF, 2-MeTHF, CPME and/or Cyclohexanone,
- ≤ 2% v/v other substances.

Preferably, the solvent-mixture consists of
- 25% v/v to 35% v/v DMSO,
- 65% v/v to 75% v/v THF, 2-MeTHF, CPME and/or Cyclohexanone,
- ≤ 2% v/v other substances.

### DETAILED DESCRIPTION OF THE INVENTION

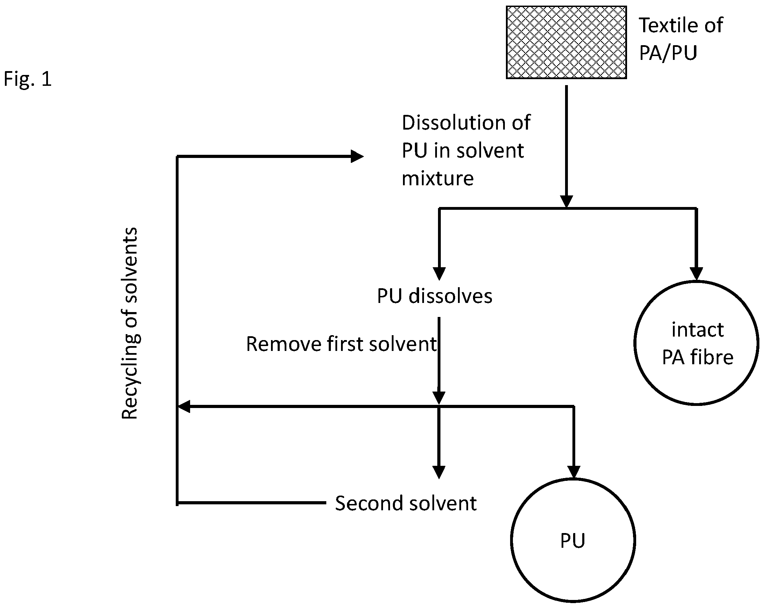

Fig. 1 shows a flow chart summarizing the steps of the present invention.

Further details and advantages of the invention as well as examples are disclosed below.

### Examples:

The dissolution behaviour of polyurethane in solvent-mixtures according to the invention and referent solvents (such as dimethylformamide (DMF), as solvents for polyurethane) has been investigated. In a first set of experiments, the dissolution behaviour of fibres consisting of polyurethane has been investigated (Examples A to D). In a second set of examples (Examples 1 to 8), the dissolution behaviour of different textiles has been investigated. The textiles consisted of blends of different types of fibres with one type of fibre being polyurethane and the other type of fibre consisting of another type of polymer.

### 1. Examples A to D:

To show that the solvent-mixtures according to the invention are indeed selective solvents for polyurethane, polyurethane fibres have been immersed in solvent-mixtures No. 1 to 4 as summarized in Table 1. In more detail, 50 mg polyurethane yarns have been immersed in 10 mL solvent-mixture each at 23 °C. Snapshots have been taken after 5 minutes and 30 minutes. The number of the solvent-mixture used in Table 1 is also represented in Table 2. As a reference, a mixture of DMF (30 %v/v) and THF (70 %v/v) denoted "Ref. 3" (see Table 2 in the next section) has been used. Solvent-mixtures No. 1 to 4 correspond to examples A to D.

**Table 1 shows difference solvents according to the invention:**

| Solvent-mixture | DMSO (%v/v) | CPME (%v/v) | THF(%v/v) | CH^{∗} (%v/v) | 2-MeTHF |
|---|---|---|---|---|---|
| No. 1 | 20 | 80 | | | |
| No. 2 | 30 | | 70 | | |
| No. 3 | 20 | | | 80 | |
| No. 4 | 30 | | | | 70 |

| | | | | | |
|---|---|---|---|---|---|
| ^{∗}CH = cyclohexanone | | | | | |

**Table 2 summarizes the dissolution of polyurethane yarns after 5 minutes, after 30 minutes and after 30 minutes, shaking the sample for 2 seconds.**

| **Solvent-mixture** | **Time** | | |
|---|---|---|---|
| | **After 5 min** | **After 30 min** | **After 30 min and shaking** |
| No. 1 | cloudy at the bottom of the bottle | turbid at the bottom of the bottle | clear solution |
| No. 2 | cloudy | cloudy at the bottom of the bottle | clear solution |
| No. 3 | cloudy | cloudy at the bottom of the bottle | clear solution |
| No. 4 | cloudy | cloudy at the bottom of the bottle | clear solution |
| Ref. 3 | cloudy | cloudy | cloudy |

| | | | |
|---|---|---|---|
| Ref. 3 = 30% v/v DMF and 70% v/v THF | | | |

As shown in Table 2, DMSO with CPME, THF, 2-MeTHF and cyclohexanone as solvent-mixtures according to the invention are good solvents for polyurethane but without the negative environmental impact of DMF.

### 2. Examples 1 to 4:

To show that the solvent-mixtures according to the invention selectively dissolve polyurethane also from mixtures/blends with other polymers, polyurethane in combination with polyamide 6 (PA6) has been investigated. A PA6 / polyurethane textile of approximately 100 mg has been immersed in different solvent-mixtures according to the invention (see again Table 1 for the solvent-mixtures). Furthermore, these textile samples have been rotated for 60 minutes on an IKA Roller 10 digital rotating at 45 RPM at room temperature (23 °C), then the remaining textile has been washed under the tap for approx. 20 seconds, dried overnight at 15 hours at 23 °C.

The same experiments have been carried out with reference solvent-mixtures summarized in Table 3.

**Table 3 shows different solvents/solvent mixtures for reference:**

| Ref. | DMF (%v/v) | THF (%v/v) |
|---|---|---|
| Ref. 1 | 100 | 0 |
| Ref. 2 | 0 | 100 |
| Ref. 3 | 30 | 70 |
| Ref. 4 | 1.6 | 98.4 |

The difference in weight before and after treatment of each textile sample is shown in Table. 4:

**Table. 4 shows the weight loss of mixed textiles after treatment with the solvents.**

| **Solvent (mixture) (% v/v)** | | **Weight textile (mg)** | | **Weight loss (%)** |
|---|---|---|---|---|
| | | **before treatment** | **after treatment** | |
| **No. 1** | (20% DMSO/80% CPME) | 100.8 | 92.3 | 8.43 |
| **No. 2** | (30% DMSO/70% THF) | 100.3 | 92.0 | 8.28 |
| **No. 3** | (20% DMSO/80% CH) | 100.6 | 91.8 | 8.75 |
| **No. 4** | (30% DMSO/70% 2-MeTHF) | 100.7 | 92.5 | 8.14 |
| Ref. 1 | (100% DMF) | 100.5 | 91.8 | 8.66 |
| Ref. 2 | (100% THF) | 100.1 | 97.2 | 2.90 |
| Ref. 3 | (30% DMF/70% THF) | 100.0 | 92.1 | 7.90 |
| Ref. 4 | (1.6% DMF/98.4% THF) | 100.4 | 97.4 | 2.99 |

As can be seen from Table 4, DMF and the solvent-mixture of DMF with THF are similar good solvents for polyurethane which is why Ref. 3 was used in Examples A to C. The four solvent-mixtures (No. 1, 2, 3, and 4) according to the invention showed the same dissolution behaviour as did pure DMF.

### 3. Examples 5 to 8:

In a second set of examples, the dissolution behaviour of polyurethane blended with polyamide 6.6 (PA66) has been investigated. A PA66 / polyurethane textile of approximately 150 to 170 mg has been immersed in different solvent-mixtures according to the invention summarized in Table 1. Furthermore, these textile samples have been rotated for 60 minutes on an IKA Roller 10 digital rotating at 45 RPM at room temperature (23 °C), then the remaining textile has been washed under the tap for approx. 20 seconds, dried overnight at 15 hours at 23 °C.

The same experiments have been carried out with reference solvents summarized in Table. 5.

**Table. 5 shows the weight loss of mixed textiles after treatment with the solvents.**

| **Solvent (mixtures) (% v/v)** | | **Weight textile (mg)** | | **Weight loss (%)** |
|---|---|---|---|---|
| | | **before treatment** | **after treatment** | |
| **No. 1** | (20% DMSO/80% CPME) | 153.7 | 115.2 | 25.05 |
| **No. 2** | (30% DMSO/70% THF) | 159.7 | 121.3 | 24.05 |
| **No. 3** | (20% DMSO/80% CH) | 156.5 | 118.1 | 24.54 |
| **No. 4** | (30% DMSO/70% 2-MeTHF) | 163.5 | 122.8 | 24.89 |
| Ref. 1 | (100% DMF) | 148.7 | 132.8 | 10.69 |
| Ref. 2 | (100% THF) | 170.3 | 157.0 | 7.81 |
| Ref. 3 | (30% DMF/70% THF) | 168.0 | 146.2 | 12.98 |
| Ref. 4 | (1.6% DMF/98.4% THF) | 153.5 | 141.3 | 7.95 |
| Ref. 5 | (100% DMSO) | 160.1 | 156.2 | 2.44 |
| Ref. 6 | (100% H₂O) | 155.3 | 153.9 | 0.90 |

As can be seen from Table 5, the four solvent-mixtures (No. 1, 2, 3, and 4) according to the invention showed even better dissolution behaviour than pure THF.

Fig. 1 shows a flowchart of the present invention describing the steps involved in the method.

A textile consisting of polyamide (PA) and polyurethane (PU) fibres is put in a solvent-mixture according to the invention so that PU dissolves in the solvent mixture. PA remains intact as a fibre and can be separated from the solution. The solution now comprises PU and the solvent-mixture. The first solvent of the solution mixture can be removed by evaporation. PU will then precipitate and the second solvent can be removed. The two solvents can then be used for the method in the dissolution step of another textile.

## Claims

1. A method for selectively separating polyurethane from a textile,
wherein the textile comprises a mixture of polyurethane fibres with at least one other type of fibres, comprising the steps of
immersing the textile in a solvent-mixture, said solvent-mixture comprising dimethyl sulfoxide (DMSO) as a first solvent and at least one other solvent selected from the group consisting of tetrahydrofuran (THF), 2-methyltetrahydrofuran (2-MeTHF), cyclopentyl methyl ether (CPME) and cyclohexanone,
keeping the textile in contact with the solvent-mixture so as to dissolve polyurethane and forming a solution, and
removing afterwards the remaining textile from the solution while polyurethane remains dissolved in the solution.

2. A method according to claim 1, wherein during the step of immersing the solution is agitated.

3. A method according to claim 1 or claim 2, wherein the textile at least one fibre selected from the group consisting of cellulose, PES, and PA.

4. A method according to one of claims 1 to 3, wherein the solvent-mixture is kept at a temperature in the range of 15 °C to 50 °C, preferably in the range of 20 °C to 35 °C during immersion.

5. A method according to one of claims 1 to 4, wherein the solvents of the solvent-mixture is regenerated after the remaining textile is removed.

6. A method according to claim 5, wherein the solvent is regenerated by adding a non-solvent or by evaporation of the solvent.

7. A method according to claim 5 or claim 6, wherein the regenerated solvents are used in the method according to claim 1.

8. A method according to one of claims 1 to 7, wherein the solvent-mixture consists of
• 20% v/v to 40% v/v DMSO, preferably 25% v/v to 35% v/v DMSO,
• 60% v/v to 80% v/v THF, 2-MeTHF, CPME and/or Cyclohexanone, preferably 65% v/v to 75% v/v THF, 2-MeTHF, CPME and/or Cyclohexanone,
• ≤ 2% v/v other substances.

9. A solvent mixture, consisting of
• 20% v/v to 40% v/v DMSO, preferably 25% v/v to 35% v/v DMSO,
• 60% v/v to 80% v/v THF, 2-MeTHF, CPME and/or Cyclohexanone, preferably 65% v/v to 75% v/v THF, 2-MeTHF, CPME and/or Cyclohexanone,
• ≤ 2% v/v other substances.
